# NEW EUROPEAN PATENT SPECIFICATION

(11) **EP 0 534 564 B2**
(45) Date of publication and mention of the opposition decision: **09.11.2005**
(45) Mention of the grant of the patent: 11.03.1998
(21) Application number: 92202935.0
(22) Date of filing: 24.09.1992
(51) Int. Cl.: A01J 7/00, A01J 5/007, A01J 5/013

(54) **An implement for milking animals automatically**
Vorrichtung zum automatischen Melken von Tieren
Dispositif de traite automatique d'animaux

(30) Priority: 27.09.1991 NL 9101636
(43) Date of publication of application: 31.03.1993
(73) Proprietor: MAASLAND N.V., 3155 PD Maasland (NL)
(72) Inventor: van den Berg, Karel, NL-2971 BR Bleskensgraaf (NL); Fransen, René, NL-3135 ZG Vlaardingen (NL)
(74) Representative: Corten, Maurice Jean F.M.

(56) References cited:
- US-A- 4 064 838
- LANDTECHNIK vol. 41, no. 5, May 1986, LEHRTE,DE pages 220 - 223 H. SCHÖN 'AUTOMATISIERTE MILCHVIEHHALTUNG - EINE UTOPIE?'
- LANDBOUWMECHANISATIE vol. 39, no. 2, February 1988, WAGENINGEN, NL page 92 'HET B2000 AUTOMATISCHE MELKSYSTEEM'
- 'DICTIONAIRE EN 2 VOLUMES' , LAROUSSE , RUE DE MONTPARNASSE 17, 75298 PARIS,FR
- DATABASE WPIL Week 8522, Derwent Publications Ltd., London, GB; AN 85-134213 & US-A-4 516 530 (R.W. REISGIES ET AL.)
- TRANSACTIONS OF THE AME. SOC. OF AGRICULTURAL ENGINEERS vol. 27, no. 4, July 1984, ST. JOSEPH, MICHIGAN, USA pages 1204 - 1210 A.K. DATTA ET AL. 'REAL TIME ACQUISITION AND ANALYSIS OF MILK CONDUCTIVITY DATA'
- LANDBOUWMECHANISATIE vol. 27, no. 5, 27 May 1976, WAGENINGEN, NL pages 469 - 471 K. MAATJE ET AL. 'AUTOMATISCHE TEMPERATUURCONTROLE BIJ MELKKOEIEN VOOR HET SIGNALEREN VAN ZIEKTEN EN TOCHTIGHEID'
- Sel'skokhozyaistvennaya Biologiya No.8, 1986, pp.13-18 "use of milking graphs to study interactions between quarters during machine milking of cows", Kokorina, E.P. et al
- Sel'skokhozyaistvennaya Biologiya No.6, 1991, pp. 174-180, "Milking-gram method for evaluation of cows suitable for intensive milk production", Kokorina, E.P. et al

## Description

The present invention relates to an implement for automatically milking animals, such as cows, comprising a milking parlour with a milking robot and a computer, the milking robot being provided with a robot arm carrying one or more teat cups to be applied to the teats of an animal's udder, the teat cups being connected to a milk line system to discharge the milk obtained via said teat cups to a milk tank, the implement further comprising at least three of the following sensors: a temperature-sensitive sensor, a flow-sensitive sensor, a sensor for establishing the electrical conductivity of a flow of milk and a vacuum-sensitive sensor, the information of these sensors being supplied to the computer and processed therein. Such an implement is known from EP-A-0 385 539. In this document an implement is described which is provided with a temperature sensor to measure the temperature of the milk. The temperature of the milk indicates the body temperature of the cows to be milked; the latter temperature is higher than normally with cows in heat and with sick cows. Further, in the implement in said document a milk conductivity sensor is provided; the signal supplied by this sensor is a measure of the health of the udder. In the case of mastitis, the conductivity of the milk is higher than that of the milk obtained from a healthy udder or from a healthy udder quarter. However, in practice, the signals from these sensors do not always result in a significant differerice between healthy and sick or oestrous animals.

According to the invention, the implement as described above is characterized by the features of claim 1.

The above mentioned sensors will be provided in the milk line system from a teat cup down to the location where the milk lines from the teat cups join. Such a milk line system or stretch may be provided for each of the quarters of the animal's udder. The sensors may be placed in one stretch and consequently relate to the flow of milk from one teat, but they may also be placed in several stretches and then relate to the flow of milk from several teats. When the flows of milk from the individual teats are combined in a milk claw, the sensors should be placed in one or several teat cups and the relatively short lines from said teat cups to the milk claw; if desirable, the milk daw may comprise separate compartments to accommodate sensors for each of the quarters of the animal's udder, with the milk from these compartments joining together in a further part of this milk claw. When the milk from the individual teats is fed through separate lines to a common milk meter, the sensors in one or several teat cups and in these separate milk lines should be placed before the connection to the milk meter. When separate milk meters are used for the milk flows from the various teats, while the flow of milk leaving such a milk meter is fed into a central milk line, the stretch in which sensors may be included is considerably longer. It should be kept in mind, however, that the location of the sensors is also determined to a large extent by the nature of the sensor. The temperature-sensitive sensor, for example, should not be placed too far down in said stretch, because the milk will have cooled down too much there and the information from this sensor will thus be of little value.

It can be noticed that it may be sufficient to determine the dead time with respect to the start of the milk flow in the teat cup applied last. The idea behind this is that the dead time with respect to the last teat cup will be much the same as the dead time determined for the application of the other teat cups. It will be more correct, however, to determine the dead time for the flow of milk from each of the teats.

In actual practice there appear to occur situations associated with the physical condition of the animals, which cause relatively large differences in dead times with regard to the start of the milk flows from the various teats. Of course, the situation where e.g. the last teat cup has not been applied correctly, or not at all, with the result that the animal cannot be milked at all, whilst the flows of milk in the teat cups connected first have already started, may occur at any time. Nevertheless, the animal should then leave the milking parlour. As far as the dead time(s) has (have) been established with regard to the flows of milk which did start, further conclusions may of course be drawn therefrom.

The extent to which the dead time has exceeded a predetermined value for a relevant animal can be determined by means of the computer. In particular, for each of the flows of milk from the various teats, the extent to which dead time exceeds the predetermined value is determined. This predetermined value will be different not only for various animals, but it will also change as the animals grow old. The farmer, however, will be basically interested only in those cases where the predetermined value is exceeded. When an animal is oestrous or ill, the dead time will generally be longer than usual. If the predetermined value of the dead time has been exceeded by a certain percentage, the farmer has accordingly obtained an indication signal of the animal's heat or illness.

If a relatively long time, for example, twice the dead time determined previously for the animal, has elapsed after the vacuum in the teat cup has been established, then the computer draws the conclusion that the dead time cannot be determined, because the flow of milk has apparently not started, which may happen when an animal just milked has still entered the milking parlour again. The animal should then be led away from the milking parlour.

When the farmer has obtained an indication that the animal is ill or threatens to fall ill, it is important to know whether mastitis or any other disease is concerned. An indication that an animal suffers from mastitis can therefore be obtained in the computer by means of the sensor for electrical conductivity of the milk flow. In particular, the electrical conductivity of the flow of milk from each of the teats can be determined. Furthermore, it can also be determined in the computer to what extent the electrical conductivity of a flow of milk has exceeded a predetermined value for a relevant animal. In order to exclude short-lived fluctuations as well as any highly gradual change in electrical conductivity of the flow of milk, this predetermined value is repeatedly re- defined by the progressive average of the relevant values established in the immediately preceding period of time, for instance, that of he latest ten measurements of electrical conductivity made. As a matter of fact, this also applies to the predetermined threshold value of the dead time.

Not only can the flow-sensitive sensor be used for establishing that a flow of milk has started, but also for establishing that a flow of milk has stopped. According to the invention, such a stop of the flow of milk is indicated to the computer, which ensures that the relevant teat cup is disconnected after the lapse of a certain period of time, e.g. of 2 to 60 s, following the occurrence of this indication. In this way the milk yield from the individual teats can be established. The function of the flow-sensitive sensor can be taken over by a milk meter; especially when said meter is capable of determining in small increments the quantity of milk produced, it is possible to establish a characteristic of the milk yield, on account of which the starting and stopping times of the flow of milk can be determined. Then, however, it is desirable to have four milk meters to determine the milk yields from the individual teats.

The processing of the signals originating from the sensors by means of a computer permits that, at times randomly selectable by the farmer, it can be indicated on the monitor display of the computer and/or by means of a printer, for which animals and to what extent the dead time and/or electrical conductivity of a flow of milk have exceeded their respective predetermined values. On the monitor display it can be depicted that e.g.:
cow 25 gave evidence of an electrical conductivity which was 16% in excess of the predetermined value,
cow 100 gave evidence of an electrical conductivity which was 20% in excess of the predetermined value,
cow 150 gave evidence of an electrical conductivity which was 22% in excess of the predetermined value, etc. Similarly, it may be shown that a dead time for cow 15 has been established which was 13% in excess of a previously determined value, that a dead time for cow 38 has been established which was 8% in excess of a previously determined value, etc.

On the basis of the information on the electrical conductivity of a flow of milk, as given by the computer, the farmer can decide on whether the milk produced by a relevant animal has to be drained off, e.g. into a waste tank, or not. In the first case, the milk obtained from the animal is fed through a computer-controlled three-way valve in a relevant milk line and drained off into e.g. a waste tank instead of being fed into a milk tank. When it is possible to establish that any quarter of an animal's udder suffers from mastitis, this permits to discard only the milk from the quarter affected. This information, too, may be indicated on the monitor display or be printed; so, in addition to the aforementioned data on electrical conductivity and dead time, it can be indicated that e.g. milk from cow 2 is being discarded, that milk from cow 36 is being discarded, etc.

The invention will now be further explained with reference to the embodiment represented in the accompanying drawings.
Figure 1 shows a schematic diagram of a milking plant according to the invention, while
Figure 2 is a teat cup drawn in detail.

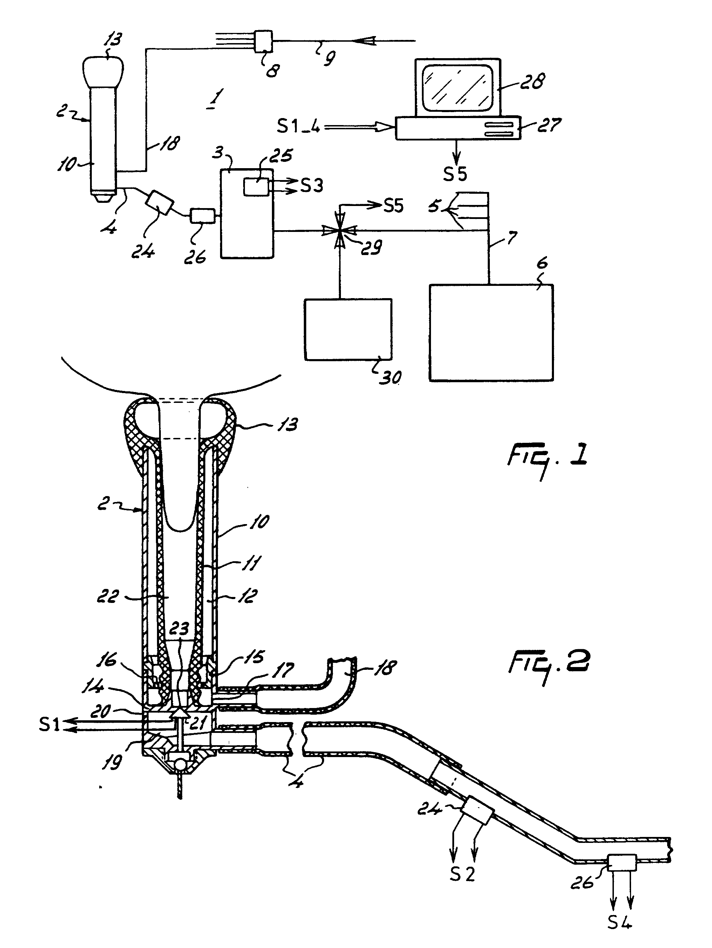

In Figure 1, a milking plant 1 for an implement for milking an animal automatically is depicted, with the representation of this milking plant being limited to only one teat cup 2 and one milk meter 3, for the sake of simplicity. The milk obtained from each udder quarter by means of teat cups 2 can be fed through a separate milk line 4 to a milk measuring apparatus comprising four milk meters 3. Separate discharge lines 5 of the milk meters 3 are connected to a common output line 7 running to a milk tank 6. A more elaborate basic set-up of the milking plant is depicted and described in EP-A-0 385 539. The milking plant further comprises, as far as matters are of importance to the present invention, a pulsator system 8 for the four teat cups 2. Vacuum line 9 for the pulsator system 8 is connected to a vacuum pump with equalizer tank, as is described in said European Patent Application.

In Figure 2, a longitudinal section of a teat cup 2 is shown; as is usual, the teat cup has been built up from a rigid, e.g. metal, sleeve 10, from an inner wall 11 made of a flexible material, such as rubber, located in this sleeve, and from a rubber cap 13 which closes off the top side of gap 12 between the sleeve 10 and the inner wall 11. The bottom side of the gap between the sleeve 10 and the inner wall 11 is closed by a sealing ring 14, whilst between the sleeve 10 and the inner wall, above said ring, there is provided a ring 15 having an opening 16. In between the sealing ring 14 and the ring 15 there is a space to which a pulsating vacuum is applied by the pulsator system 8 through a line 18 and an opening 17, giving rise to a pulsating vacuum in the space between the sleeve 10 and the inner wall 11, which pulsating vacuum causes alternately the inner wall to enclose the teat tightly and to move outwards, resulting in the rhythmic motion about the teat as required for milking, provided that the teat cup is correctly connected to this teat. To provide a buffer for the milk to be collected and to minimise fluctuations in the vacuum under the teat, there is provided a buffer space 19 in the bottom part of the teat cup, where a relatively narrow air intake aperture 20 on behalf of the transport of milk is provided. The line 4 serving to drain the milk to the milk meter 3 is connected to this buffer space 19. Furthermore, in this buffer space 19 there is provided a stationary member 21 which partially projects into the opening between inner space 22 and the buffer space 19 to ensure that the milk gradually flows into buffer space 19 and any separation of the milk is prevented. On the top side of this member 21 there is provided a temperature-sensitive sensor 23 to make temperature measurements. The milk temperature, as may thus be established already in the teat cup 2, is a good measure of the body temperature; especially the body temperatures of ill animals, such as those affected by mastitis, are beyond the normal value. A flow-sensitive sensor 24 to establish the starting and stopping of the milk flow is included in a falling portion of the milk line 4. The operation of this flow-sensitive sensor is based on that a flow of milk makes an electrical connection between two electrodes. The inclined position of the sensor prevents milk from being left in between the electrodes, or to put it differently, it prevents that a little pool of milk remains in between the electrodes; for this would result in that a flow of milk is indicated uninterruptedly. The milk line 4 also includes a vacuum-sensitive sensor 26 to establish whether a sufficient vacuum prevails in the milk line 4 and the teat cup 2. In milk meter 3 there is provided a sensor to determine the electrical conductivity 25, this is the mastitis sensor. This mastitis sensor comprises a reservoir provided with electrodes to measure the electrical conductivity of milk being in the reservoir. With each new flow of milk, the milk being in the reservoir is replaced. If the milk is affected, a higher electrical conductivity is established. As with every new flow of milk a slight increase in the electrical conductivity is observed in the beginning, it is possible to establish when a flow of milk starts, too, by means of this mastitis sensor in the place of, or in addition to, the flow-sensitive sensor. The output signals S1, S2, S3 and S4 of the respective sensors 23, 24, 25 and 26 are applied to a computer 27, where the information from these sensors is further processed and made knowable on the display screen of a monitor 28. The discharge line 5 is further provided with a three-way valve 29 to be able to drain the flow of milk from a quarter of the animal's udder affected by mastitis off into a waste tank 30. When the farmer decides to send milk to the waste tank 30 on account of information made knowable by the computer and he issues an appropriate command to the computer to do so, the three-way valve 29 is changed over by means of a signal S5 produced by the computer.

## Claims

1. An implement for automatically milking animals, such as cows, comprising a milking parlour with a milking robot and a computer (27), the milking robot being provided with a robot arm carrying one or more teat cups (2) to be applied to the teats of an animal's udder, the teat cups (2) being connected to a milk line system (4, 5) to discharge the milk obtained via said teat cups (2) to a milk tank (6), the implement further comprising at least three of the following sensors: a temperature-sensitive sensor (23), a flow-sensitive sensor (24), a sensor (25) for establishing the electrical conductivity of a flow of milk and a vacuum-sensitive sensor (26), the information of these sensors being supplied to the computer (27) and processed therein, **characterized in that**, in order to obtain a more reliable indication of heat or illness of the animal, the computer (27) is arranged to process the information of the temperature sensor (23) in combination with the dead time between the instant when one of the teat cups (2) has been connected to a teat, established by the vacuum-sensitive sensor (26), and the instant when the flow of milk from this teat has started, established by the flow-sensitive sensor (24).

## Patentansprüche

1. Vorrichtung zum automatischen Melken von Tieren, wie z. B. Kühen, die aus einem Melkstand mit einem Melkroboter und einem Computer (27) besteht, wobei der Melkroboter einen Roboterarm mit einem oder mehreren Zitzenbechern (2) aufweist, die an die Zitzen eines Tiereuters anzuschließen und mit einem Milchleitungssystem (4, 5) verbunden sind, um die über die Zitzenbecher (2) gewonnene Milch in einen Milchtank (6) abzuführen, wobei die Vorrichtung ferner mindestens drei der folgenden Sensoren aufweist: einen Temperatursensor (23), einen Strömungssensor (24), einen auf die elektrische Leitfähigkeit eines Milchstromes ansprechenden Sensor (25) und einen auf Vakuum ansprechenden Sensor (26), wobei die von diesen Sensoren gelieferte Information in den Computer (27) eingegeben und darin verarbeitet wird,
**dadurch gekennzeichnet, daß** zur Erzielung einer zuverlässigeren Information über Brunst oder Krankheit des Tieres der Computer (27) die Information des Temperatursensors (23) in Kombination mit der Totzeit verarbeitet, die zwischen dem Zeitpunkt, zu dem einer der Zitzenbecher (2) an eine Zitze angeschlossen wurde, und der durch den auf Vakuum ansprechenden Sensor (26) ermittelt wird, und dem Zeitpunkt vergeht, zu dem der Milchfluß aus dieser Zitze eingesetzt hat, und der durch den Strömungssensor (24) ermittelt wird.

## Revendications

1. Dispositif de traite automatique d'animaux, tels que des vaches, comprenant une stalle de traite avec un robot trayeur et un ordinateur (27), le robot trayeur étant muni d'un bras de robot portant un ou plusieurs godets de trayons (2) destinés à êtrereliés aux trayons du pis d'un animal, les godets de trayons (2) étant reliés à un système de tuyaux a lait (4, 5) pour évacuer vers un réservoir à lait (6) le lait recueilli par l'intermédiaire desdits godets de trayons (2), le dispositif comprenant en outre au moins trois des capteurs suivants un capteur (23) sensible à la température, un capteur (24) sensible au débit, un capteur (25) pour mesurer la conductivité électrique d'un écoulement de lait, et un capteur (26) sensible au vide, l'information venant de ces capteurs étant fournie à l'ordinateur (27) dans lequel elle est traitée, **caractérisé en ce que**, pour obtenir une indication plus fiable de l'état de chaleur ou de maladie de l'animal, l'ordinateur (27) est agencé pour traiter l'information du capteur de température (23) en combinaison avec le temps mort entre l'instant où un des godets de trayons (2) a été relié à un trayon, cet instant étant établi par le capteur (26) sensible au vide, et l'instant où a commencé le débit de lait de ce trayon, établi par le capteur (24) sensible au débit.
